# EUROPEAN PATENT APPLICATION

(11) **EP 1 217 536 A2**
(43) Date of publication of application: **26.06.2002**
(21) Application number: 01303004.4
(22) Date of filing: 29.03.2001
(51) Int. Cl.: G06F 17/28

(54) **Converting method for converting documents between different locales**

(30) Priority: 21.12.2000 JP 2000388736
(71) Applicant: TSUBASA SYSTEM CO. LTD., Tokyo (JP)
(72) Inventor: Sakai, Michimoto, c/o Tsubasa System Co., Ltd., Koutou-ku, Tokyo (JP)
(74) Representative: Skone James, Robert Edmund

(57) **Abstract**

A method for converting document data. The method comprises the steps of:
a) identifying original locale information of an original document;
b) identifying original item information of the original document;
c) determining a converting process based on the original locale information and further on subject locale information of a subject document; and
d) converting data contents of the original information by the converting process.

## Description

The present invention relates to a converting method, a device, a program, and a storing medium storing the program for converting document data, which is generated based on a predetermined display rule into data having a display form of a different display rule.

In order to manage a group of data sets, there have been proposed a method for inputting data using a form function, such as Hyper Text Markup Language, and also a method for generating a document data file with a suitable layout. Using Extensible Markup Language (XML) enables managing of data item names and attribute information as well as data contents. The data item names and the attribute information are expressed by tags.

However, because different locales have a different display style, there has been necessary to prepare an input format for each locale or to generate a document data file for each locale.

Also, in order to use data, an operator is required to search out an input page or document data that is generated for the locale to which the user belongs.

It is an objective of the present invention to overcome the above problems and also to provide a method for converting data between different locales in a simple manner, thereby displaying documents at a different locale such that an operator can view the displayed documents in an effective manner.

In order to achieving the above and other objectives, there is provided a converting method of converting document data. The converting method includes the steps of identifying original locale information of an original document, identifying original item information of the original document, determining a converting process based on the original locale information and further on subject locale information of a subject document, and converting data contents of the original information by the converting process.

There is also provided a converting program of converting document data. The converting program includes the programs of identifying original locale information of an original document, identifying original item information of the original document, determining a converting process based on the original locale information and further on subject locale information of a subject document, and converting data contents of the original information by the converting process.

Further, there is provided a storing medium storing the above converting program.

Moreover, there is also provided a converting device including identifying means for identifying original locale information and original item information of an original document, determining means for determining a converting process based on the original locale information and further on subject locale information of a subject document, and converting means for converting data contents of the original information by the converting process.

### In the drawings:

Fig. 1 is a flowchart representing a process executed according to a first embodiment of the present invention;
Fig. 2(a) shows configuration of an original document, which is subject to a converting process of the present invention;
Fig. 2(b) shows an index file of a form data file;
Fig. 2(c) shows the form data file;
Fig. 3(a) shows how information of the original document of Fig. 2(a) is displayed;
Fig. 3(b) shows a resultant file displayed by a viewer software;
Fig. 4 shows contents of a document file where the information of Fig. 2 is stored;
Fig. 5 shows a converting process table;
Fig. 6 shows a modification of the converting process table;
Fig. 7 shows a resultant file obtained by a converting process;
Fig. 8 shows contents of a document file according to a second embodiment of the present invention;
Fig. 9 shows contents of a document file according to a third embodiment of the present invention;
Fig. 10 shows an index of form data according to the third embodiment;
Fig. 11 shows locale-classified form data according to the third embodiment of the present invention;
Fig. 12 shows an example of output results according to the third embodiment of the present invention;
Fig. 13 shows another example of output results;
Fig. 14 shows another example of output results;
Fig. 15 shows subject data according to a forth embodiment of the present invention;
Fig. 16 shows output attributes defined outside subject data;
Fig. 17 shows a converting process table according to a fifth embodiment of the present invention; and
Fig. 18 shows a software selection list according the fifth embodiment of the present invention.

Preferred embodiments of the present invention will be described while referring to the attached drawings.

First, logical configuration of a document file used in the present invention will be described. The document file includes specific data that is specific to a document application and subject data that is subject to a converting process. In a specific data region, there are stored display control data, document control data, and other data. The display control data is used for displaying the subject data, for example. The document control data is unrelated to the converting process. The other data is unnecessary to be converted. In a subject data region, there are stored the subject data itself and also an information required for the converting process. It should be noted that the specific data and the subject data can alternatively be stored in two different files. In this case, the files are linked to each other by including link information to the specific data, by a predetermined rule which is determined based both on storing locations and names of the files, or any other linking method. It should be also noted that the specific data may be data stored in a general-purpose format, such as a style sheet. Further, the document file can include the subject data only, without including the specific data.

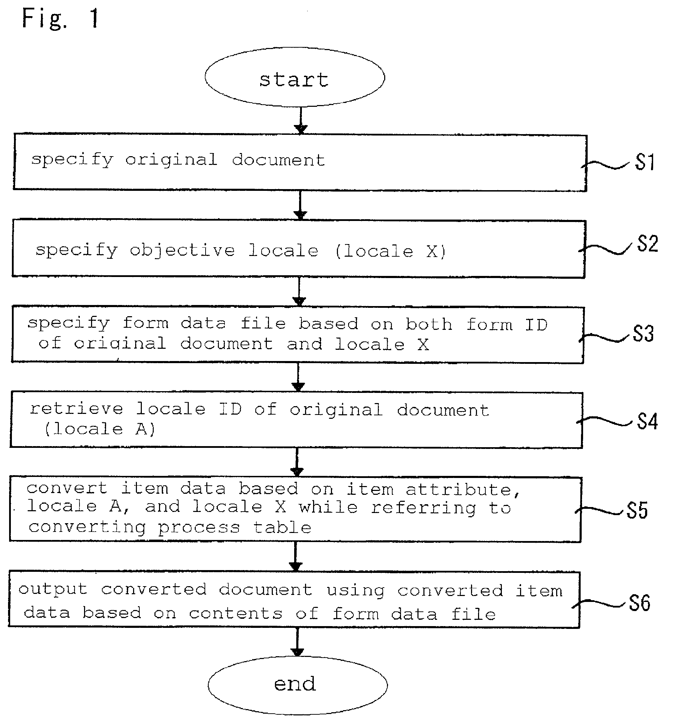

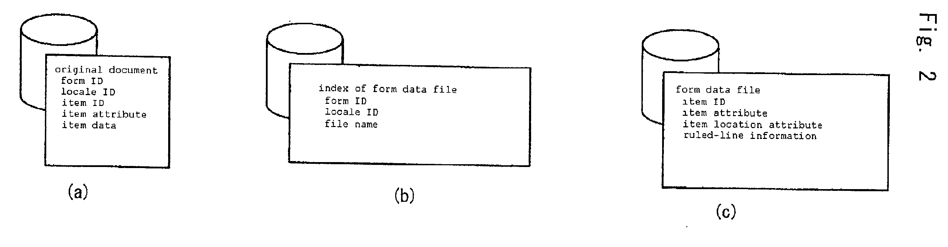

Next, a process according to a first embodiment of the present invention will be described while referring to the flowchart of Fig. 1 and also to Figs. 2 to 7.

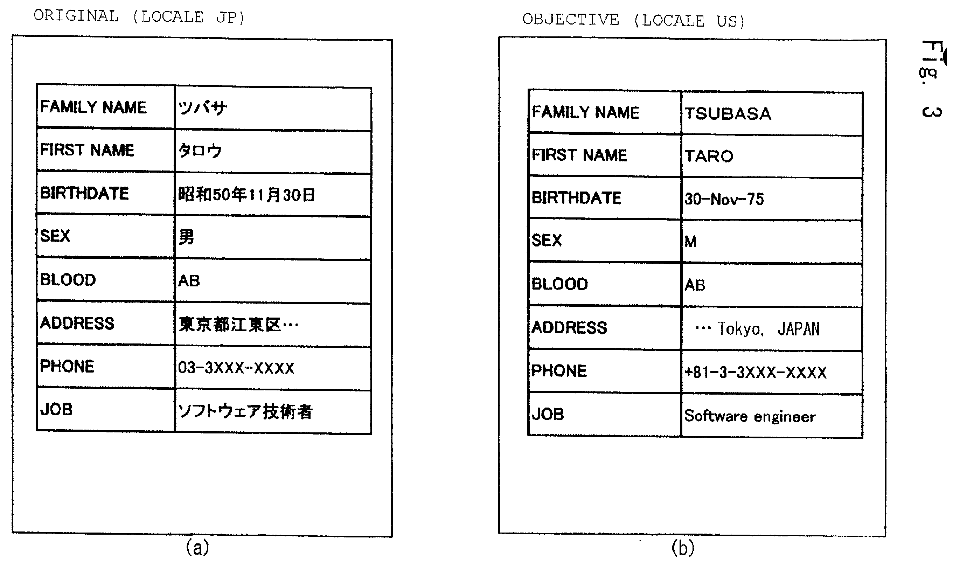

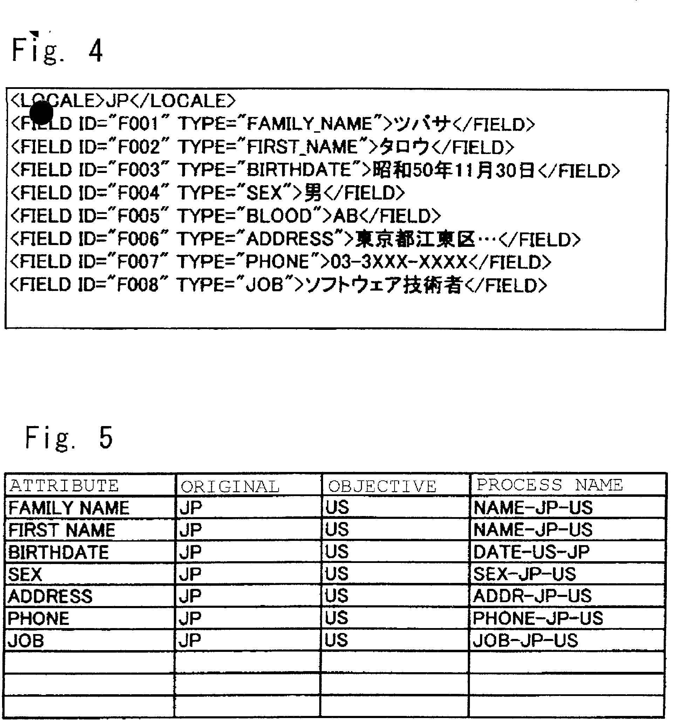

Once the process is started, first in S1, a document which is subject to the converting process (referred to as "original document" hereinafter) is specified. As shown in Fig. 2(a), the original document includes information including a form identification (ID), a locale ID, an item ID, an item attribute, and item data. The information may be stored in a document file in any format. However, in a following example, it is assumed that the information is stored in a tag format in the document file in order to simplify explanation. Fig. 3(a) shows how the information in the tag format is displayed, and Fig. 4 shows the contents of the document file. The information may be directly retrieved in accordance with the specification of the format of the opened document file. Alternatively, the information may be retrieved via an API which is provided by a driver software or a filter software. The driver software and the filter software provide a read-and-write interface for each document file format.

In Fig. 3(a), ruled lines define a right side column and a left side column. Data listed in the left side column (simply referred to as "left column data" hereinafter) and the ruled lines are handled as the specific data of the document file. Data listed in the right side column (simply referred to as "right column data" hereinafter) in Fig. 3(a) is handled as the subject data (details will be described later).

Next in S2, a locale to which the original document is converted (referred to as "objective locale") is specified in accordance with a command from an operator. In the present example, it is assumed that a locale "US" is specified.

In S3, a form data file is specified based on the form ID of the original document and the objective locale, i.e., the locale "US" in the present example. Specifically, the form data file is specified by using an index file of the form data file. As shown in Fig. 2(b), the index file includes a form ID, a locale ID, and a file name. The form data file includes, as shown in Fig. 2(c), an item ID, an item attribute, item location information, ruled-line information, and the like.

In S4, a locale ID of the original document is retrieved by searching through a LOCALE tag. In the present example it is assumed that a locale "JP" is retrieved in S4.

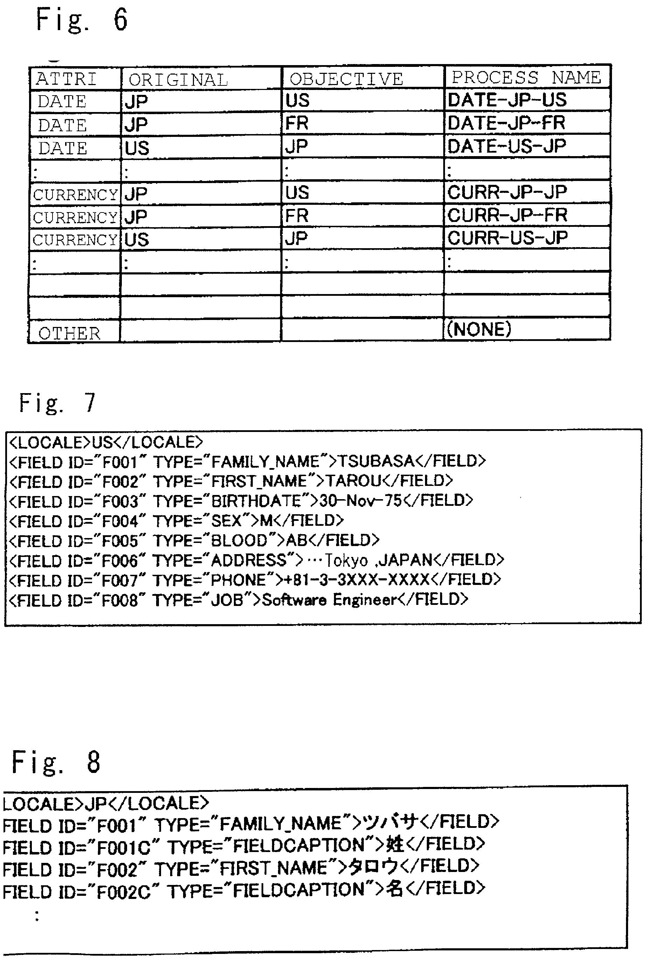

In S5, the item data of the original document is converted based on all of the item attribute, the locale "JP", and the locale "US", while referring to a converting process table shown in Fig. 5. As shown in Fig. 5, the converting process table includes columns for ATTRIBUTE, ORIGINAL LOCALE, OBJECTIVE LOCALE, and PROCESS NAME. Listed in the ATTRIBUTE column are "FAMILY NAME", "FIRST NAME", "BIRTHDATE", "SEX", "ADDRESS", "PHONE", and "JOB". "JP" is set in the ORIGINAL LOCALE column, and "US" in the OBJECTIVE LOCALE column. Module names to execute are written in the FILE NAME column. However, the converting process table may be configured in a manner shown in Fig. 6 instead.

The converting process table is referred to in a manner described next. First, a FILE tag of the original document is searched out, and an attribute information is retrieved form data which is expressed TYPE="XXX". Next, a portion of data sandwiched between a FIELD tag, a start tag <FIELD> and an end tag </FIELD> is retrieved and set as data value. Next, while referring to the converting process table, it retrieves a converting process module name, which is specified by the attribute, the original locale, and the objective locale. For example, when a field F001 has the attribute "FAMILY NAME", the original locale "JP", and the objective locale "US", a process is executed by a "NAME-JP-US" module for the field F001. That is, "NAME-JP-US" module is retrieved for the data value of "tsubasa(in Japanese)", and a data value of "tsubasa" is received a resultant value. The resultant value can be received throuth stack, a memory, a file, or standard output.

It should be noted that in the above-described example, Katakana characters are simply converted to alphabetical characters. However, Chinese characters may also be converted into alphabetical characters by the "NAME-JP-US" module referring to a biographical dictionary provided thereto. Also, objective locale information included in the converting process table (Fig. 3) may be automatically retrieved from an OS which is currently driving, without receiving a command from the operator.

The same process is executed for every fields. However, when a module name of a converting process is not specified, such as when data for a corresponding attribute, such as the attribute BLOOD, is not included in the converting process table (Fig. 3), then the data value as it is is output as a resultant value without being subject to the process.

After the converting process is executed with respect to all the fields, next in S6, a resultant file shown in Fig. 7 is output along with the specific information, i.e., the ruled lines and the left column data, and is displayed by a viewer software in a manner shown in Fig. 3(b). Then, the present routine is ended.

Next, a second embodiment of the present invention will be described while referring to Fig. 8. Fig. 8 corresponds to Fig. 4 of the first embodiment. Any other configurations of the second embodiment is the same as that of the first embodiment, so description for these configurations will be omitted here in order to avoid duplication in explanation.

In the above-described first embodiment, the left column data is handled as the specific information. However, in the second embodiment, the left column data is handled as a field, which is indicated in the third and fifth lines of Fig. 8. That is, the item names are also subject to the locale conversion.

The other processes are the same as those of the first embodiment.

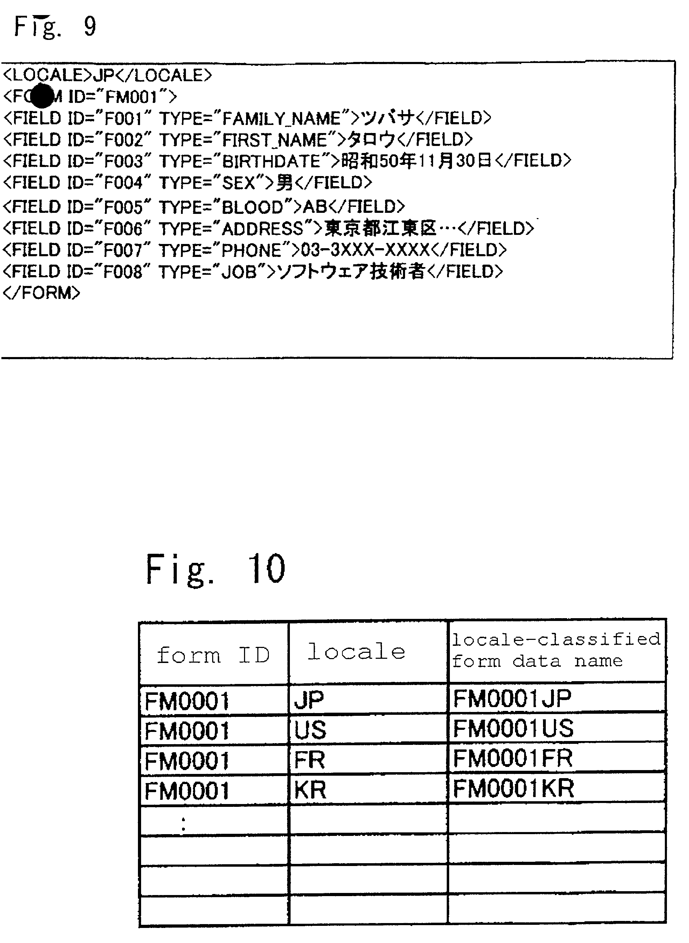

Next, a third embodiment of the present invention will be described while referring to Figs. 9 to 14.

According to the third embodiment, a document file includes form identification information in addition to the contents of the document file shown in Fig. 4 of the above-described first embodiment. Accordingly, the form identification information also is subject to the converting process. <FORM ID="FM001"> shown in Fig. 9 is an example of the form identification information. When retrieving the subject data to interpret the subject data, the converting software (process) retrieves the form identification information also. Because processes other than an output process for outputting converted resultant data are all the same as those described for the above first embodiment, description will be provided only for the output process, and description for any other processes will be omitted here. The output process will be described below.

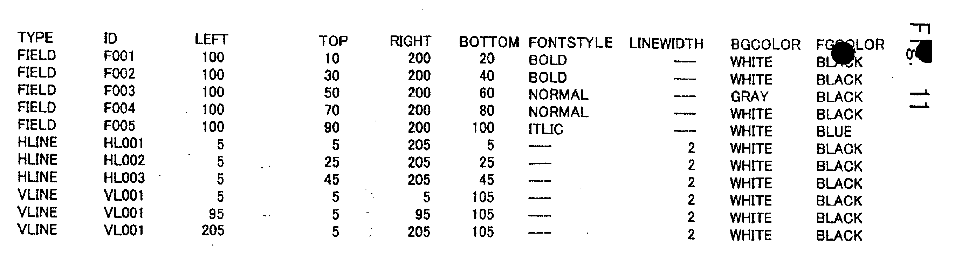

When outputting the converted data, it is determined locale-classified form data (Fig. 11) corresponding to the objective locale and the form identification information while referring to an index (Fig. 10) of form data. Then, the converted data is output based on the locale-classified form data (Fig. 11).

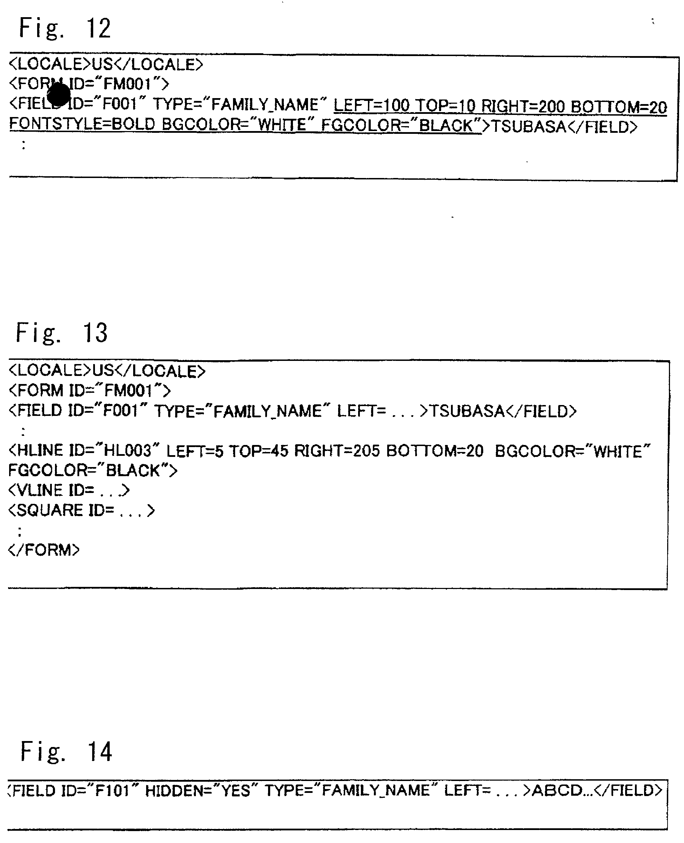

Fig. 12 shows an example of when a FIELD tag is output with information on the form data appended thereto (see underlined part in Fig. 12). Form data other than FIELD-type form data may be output along with FIELD-type data while specifying a predetermined tag (Fig. 13). Alternatively, the form data other than FIELD-type form data may be output as the specific data of the document application.

Some fields may exist in an original document, but not in objective form data. In this case, it is preferable to output such fields with an option parameter appended thereto. The option parameter indicates a hidden attribute (Fig. 14). Field information appended with the hidden attribute "HIDDEN" is ignored during displaying and printing, and is handled as a normal field during conversion.

By handling form data information in this manner, even when there is a danger that conversion of a display language spoils the beauty of a displayed document or/and undesirably changes a display width, a format enabling desirable display of the document is set for each of locales. Accordingly, a converted document can be displayed in a desirable and proper manner.

It should be noted that although in the above-described third embodiment a form of a converted document is determined based on the form identification information of the original document, the form may be determined in accordance with an input command from the operator. In this case, the original document can be converted into a document in a various different formats. For example, when the operator wishes to obtain a document for the elderly, an original document may be converted into a document with a relatively large font size.

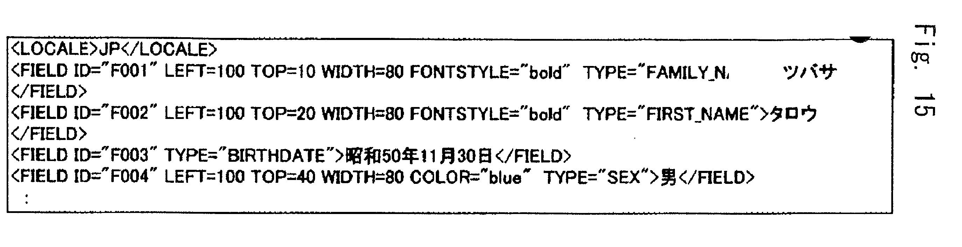

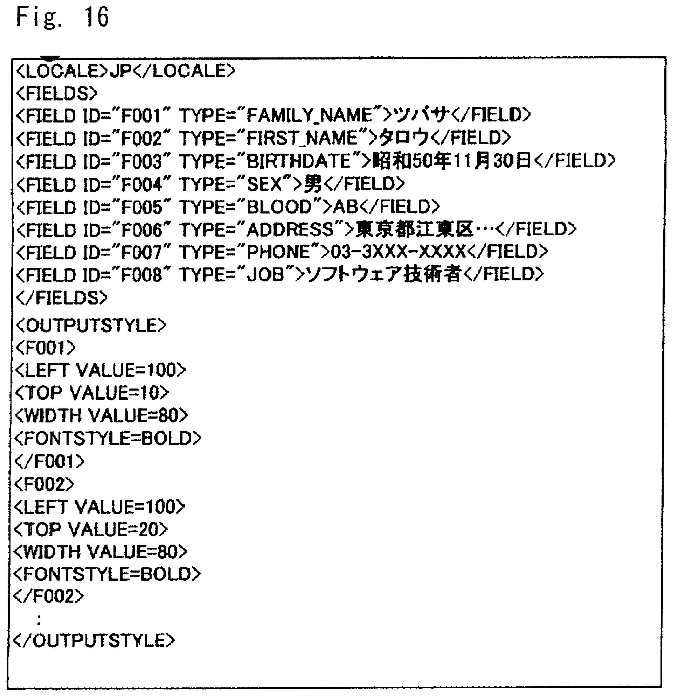

Next, a forth embodiment of the present invention will be described while referring to Figs. 15 and 16.

In the forth embodiment, the converting process software (process) retrieves output-attribute information of each field, such as an output location, an output width, and the like, from an original document. With this configuration, there is no need to output the information to a file. Therefore, the information can be directly displayed on a display monitor and also be directly printed out by a printer. The information can also be output to the file in any document format style.

As shown in Fig. 15, the output-attribute information may be included in each tag of the subject data. Alternatively, as shown in Fig. 16, the output attributes of the field may be defined outside the subject data. This method is called style sheet. In either case, the information may be recorded as a part of the specific information of the document application. Also, the output attribute information can be stored in any storing location as long as the converting software is capable of retrieving the output attributes by referring to the field name.

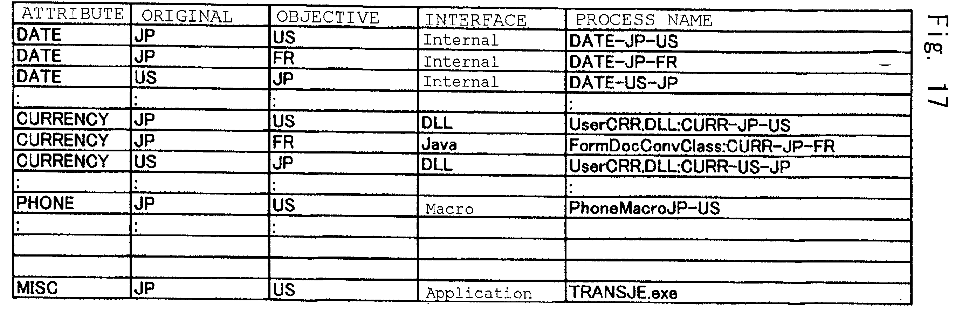

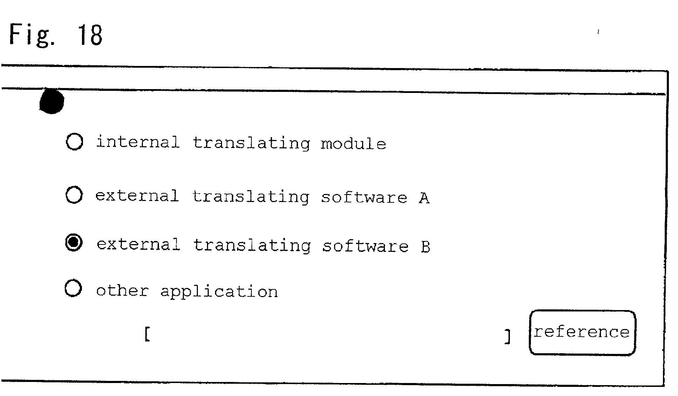

Next, a fifth embodiment of the present invention will be described while referring to Figs. 17 and 18.

In the fifth embodiment, it is enabling the operator to select details of the process. That is, as shown in Fig. 17, a converting process table according to the fifth embodiment includes columns for ATTRIBUTE, ORIGINAL LOCALE, OBJECTIVE LOCALE, INTERFACE, and PROCESS NAME.

Attributes written in the ATTRIBUTE column are "DATE", "CURRENCY", "PHONE", and "MISCELLANEOUS". "JP", "US", "FR", and the like are written in the ORIGINAL LOCALE column and the OBJECTIVE LOCALE column. "Internal", "DLL", "Java", "Macro", "Application", and the like can be written in the INTERFACE column.

"Internal" in the INTERFACE column of the converting process table shown in Fig. 17 indicates a module provided internally to viewer software, which is for displaying the display shown in Fig. 3. "DLL" stands for Dynamic Link Library and is a library prepared externally. "Java" indicates either Java Applet or Java Application. "Macro" is a module expressed in macro language, which is used by the viewer software for displaying the display of Fig. 3. "Application" is an application which is prepared externally and is independently driven.

All of these interfaces execute corresponding processes written in the PROCESS NAME column which include a file name, a class name, a function name, and the like.

When a command to edit a process corresponding to MISC-JP-US in Fig. 7 is received, then a software selection list shown in Fig. 18 is displayed so as to enabling the operator to select or set a desired converting process.

Usually, it is preferable to execute the converting process with respect to the one which has a data style with an attribute, such as a mere character array, by using a general-purpose translation software. However, according to the fifth embodiment, the operator can select a desired software from a various translation software available on the market in a simple and easy manner.

The software selection list is displayed in a manner shown in Fig. 18. The software selection list may be either a predetermined selection list or generated each time when displayed. In latter case, translation software installed are detected when displayed, thereby generating the software selection list listing the detected software. It should be noted that "external translation software A" and the like may be replaced by an actual name of software. When the operator finds no desired translation software in the software selection list, then the operator either selects "other applications" or clicks on a reference button. When "other applications" is selected, an input box is displayed. The user inputs the name of a desired software in the input box. On the other hand, when the user clicks on the reference button, then a file list is displayed, from which the operator selects the desired one. Also, when installing new software, the display of Fig. 18 may be displayed, so that the operator can update the software selection list as desired and set the same as default.

It should be noted that the same components as those shown in Fig. 3 are assigned with the same numberings in the drawings, and explanations for those are omitted.

While the invention has been described in terms of preferred embodiments, those skilled in the art recognize that the present invention can be practiced with modification within the spirit and scope of the appended claims.

For example, the above embodiments are described for when two languages have substantially a different structure. However, the present invention may also be adopted for a time difference, a weight-and-measuring difference, and the like. In these cases, a converting process is performed, rather than the translating process.

Also, in the above-described embodiments, a hidden attribute "HIDDEN" is appended as field information. However, an option attribute indicating whether or not to execute a process, such as translation, conversion, and the like, may be appended.

As described above, according to the present invention, document data is converted based on locales such that the document data is properly displayed in a locale different from an original locale. Also, the document data that has been once converted can be further converted for other locale.

Further, according to the present invention, with respect to those documents for which a layout is an important factor, form data is prepared for each of locales. This enables conversion of the documents without undesirably changing a ruled-line position, a display width of each item, and the like.

Moreover, a single set of data can be expressed in a various different manners. Accordingly, the data can be converted into data in a plurality of different locales.

Also, according to the present invention, a document conversion and a document display can be customized as the operator desires.

## Claims

1. A method for converting document data, comprising the steps of:
a) identifying original locale information of an original document;
b) identifying original item information of the original document;
c) determining a converting process based on the original locale information and further on subject locale information of a subject document; and
d) converting data contents of the original information by the converting process.

2. The converting method according to claim 1, further comprising the step of e) identifying item attribute information of the item information, wherein the converting process is determined in the step c) based further on the item attribute information.

3. The method according to claim 1 or claim 2, further comprising the steps of f) identifying output location information of the item information, and g) outputting the data contents which has been converted in the step d) based on the output location information.

4. The method according to any of claims 1 to 3, further comprising the step of h) identifying format information of the original document, and i) outputting the data contents which has been converted in the step d) based on the format information.

5. The method according to any of claims 1 to 4, further comprising the step of j) subject format information of the item information, and k) outputting the data contents which has been converted in the step d) based on the subject format information.

6. The method according to any of claims 1 to 5, further comprising the steps of:
l) identifying output location information of the item information;
m) identifying format information of the original document;
n) subject format information of the item information; and
o) outputting the data contents which has been converted in the step d) based on all of the output location information, the format information, and the subject format information.

7. A program for converting document data, comprising means for:
a) identifying original locale information of an original document;
b) identifying original item information of the original document;
c) determining a converting process based on the original locale information and further on subject locale information of a subject document; and
d) converting data contents of the original information by the converting process.

8. A storing medium storing a program for converting document data, the converting program comprising a program for:
a) identifying original locale information of an original document;
b) identifying original item information of the original document;
c) identifying determining a converting process based on the original locale information and further on subject locale information of a subject document; and
d) converting data contents of the original information by the converting process.

9. A converting device comprising:
identifying means for identifying original locale information and original item information of an original document;
determining means for determining a converting process based on the original locale information and further on subject locale information of a subject document; and
converting means for converting data contents of the original information by the converting process.

10. The converting device according to claim 9, wherein the identifying means further identifies item attribute information of the item information, and the determining means determines the converting process based further on the item attribute information.

11. The device according to claim 9 or claim 10, further comprising outputting means for outputting the data contents converted by the converting means, wherein the identifying means further identifies output location information of the item information, and the outputting means outputs the data contents based on the output location information.

12. The device according to any of claims 9 to 11, further comprising the step of h) identifying format information of the original document, and i) outputting the data contents which has been converted in the step d) based on the format information.

13. The device according to any of claims 9 to 12, further comprising outputting means for outputting the data contents converted by the converting means, wherein the identifying means further identifies subject format information of the item information, and the outputting means outputs the data contents based on the subject format information.

14. The device according to any of claims 9 to 13, further comprising converting process storing means for inputting and storing information required for determining the converting process.

15. The device according to any of claims 9 to 14, further comprising outputting means for outputting the data contents converted by the converting means, and converting process storing means for inputting and storing information required for determining the converting process, wherein the identifying means further identifies output location information of the item information, format information of the original document, and subject format information of the item information, and the outputting means outputs the data contents based on all of the output location information, the format information, and the subject format information.
